# EUROPÄISCHE PATENTSCHRIFT

(11) **EP 2 145 728 B1**
(45) Veröffentlichungstag und Bekanntmachung des Hinweises auf die Patenterteilung: **06.07.2011**
(21) Anmeldenummer: 09006370.2
(22) Anmeldetag: 12.05.2009
(51) Int. Cl.: B23Q 7/04, B25B 5/06, B27B 31/00

(54) **Vorschubvorrichtung für plattenförmige Werkstücke**
Feed device for plate-shaped workpieces
Dispositif d'avance pour pièces usinées en forme de plaques

(30) Priorität: 16.07.2008 DE 102008033496
(43) Veröffentlichungstag der Anmeldung: 20.01.2010
(73) Patentinhaber: HOLZMA Plattenaufteiltechnik GmbH, 75365 Calw-Holzbronn (DE)
(72) Erfinder: Flämmer, Jürgen, 75394 Oberreichenbach (DE)
(74) Vertreter: Knapp, Thomas

(56) Entgegenhaltungen:
- EP-A- 1 674 197

## Beschreibung

Die Erfindung betrifft eine Vorschubvorrichtung für plattenförmige Werkstücke nach dem Oberbegriff des Anspruchs 1.

Aus der DE 10 2004 062 048 A1 ist eine Vorschubvorrichtung bekannt, die einen Haltekörper mit einer Spannzange und zwei als Spannbacken ausgebildeten Klemmbereichen aufweist. Zwischen den beiden Spannbacken ist ein großformatiges, plattenförmiges Werkstück verklemmbar. Die beiden Spannbacken werden dabei in Klemmrichtung gegenüber dem Haltekörper federnd gehalten, um während einer Vorschubbewegung Unebenheiten eines Auflagetisches, auf dem die zu transportierenden Werkstücke liegen, auszugleichen. Die EP 1 674 197 A1 beschreibt eine Spannzange, bei der ein oberer Klemmbereich mit einem Zylindergehäuse eines Pneumatikzylinders verbunden ist, dessen Kolbenstange jedoch gehäusefest ist, der untere Klemmbereich ist um ein gehäusefestes Lager verschwenkbar angeordnet.

Aufgabe der Erfindung ist es, eine Vorschubvorrichtung der eingangs genannten Art so weiterzuentwickeln, dass sie noch kompakter, einfacher und kostengünstiger aufgebaut ist.

Diese Aufgabe wird durch eine Vorschubvorrichtung und eine Spannzange mit den Merkmalen der nebengeordneten Ansprüche gelöst. Vorteilhafte Weiterbildungen sind in Unteransprüchen angegeben. Weitere für die Erfindung wichtige Merkmale finden sich in der Beschreibung und in der Zeichnung, wobei die Merkmale sowohl in Alleinstellung als auch in unterschiedlichen Kombinationen für die Erfindung wesentlich sein können, ohne dass hierauf explizit hingewiesen wird.

Das bedeutet, dass die "schwimmende" Lagerung der beiden Klemmbereiche ganz einfach durch die Längsbeweglichkeit der Kolbenstange zur Verfügung gestellt wird, denn mit dieser sind beide Klemmbereiche letztlich gekoppelt. Die Klemmbereiche können sich aufgrund der "schwimmenden" Lagerung im Verlauf der Vorschubbewegung den Unebenheiten des Auflagetisches angleichen. Es sei darauf hingewiesen, dass ein Klemmbereich gegebenenfalls auch mehrere einzelne "Finger" umfassen kann. Die Vorschubeinrichtung ist damit sehr kompakt aufgebaut, d.h. sie benötigt wenig Bauraum. Zusätzlich verringert sich das Gewicht der Spannzange. Natürlich können weitere Hilfselemente, wie bspw. hydraulisch und/oder pneumatisch und/oder federnd wirkende Aggregate oder Einrichtungen die einzelnen Klemmbereiche in ihrer Funktion zusätzlich unterstützen.

Besonders vorteilhaft ist es, wenn die Kolbenstange in Längsrichtung mit Spiel gelagert ist. Dies ist herstellungstechnisch einfach realisierbar und senkt somit die Kosten. Neben einer mindestens in Längsrichtung spielbehafteten Führung für die Kolbenstange sind im Wesentlichen keine zusätzlichen Einrichtungen für die "schwimmende" Lagerung der beiden Klemmbereiche nötig.

Dazu wird ergänzend vorgeschlagen, dass die Kolbenstange in Längsrichtung, beispielsweise nach oben wirkend von einer Federeinrichtung beaufschlagt wird. Die Federeinrichtung drückt dabei die am Auflagetisch aufliegenden Spannbacke über die Kolbenstange nach oben und entlastet somit auch dünne Platten, wenn das Werkstück vergleichsweise leicht ist. Dadurch arbeitet die Vorschubvorrichtung sicherer. Gegebenenfalls kann die Federkraft auch einstellbar sein, so dass sie an das aktuelle Werkstückgewicht angepasst werden kann. Als Federeinrichtung ist ein Federelement bspw. aus einem Federstahl denkbar, dessen Federkraft in Längsrichtung auf die Kolbenstange wirkt. Ebenso möglich ist jedoch auch ein unter der Kolbenstange angeordnetes Luftkissen, das durch einen erhöhten Luftdruck die Kolbenstange entlastet. Insbesondere in diesem Fall kann die Einstellbarkeit der Federkraft einfach realisiert werden. Mit dem gefederten Klemmbereich können insbesondere Unebenheiten des Auflagetisches ausgeglichen und Zwangskräfte auf das Werkstück vermieden werden.

Ferner wird vorgeschlagen, dass der erste Klemmbereich starr mit der Kolbenstange verbunden ist. Dies stellt fertigungstechnisch eine besonders einfache und damit preisgünstig ausgestaltete Ausführungsform der Vorschubvorrichtung dar.

In einer alternativen Ausführungsform der Vorschubvorrichtung wird vorgeschlagen, dass der erste Klemmbereich mit der Kolbenstange schwenkbar verbunden ist. Das bedeutet, dass sich der schwenkbare erste Klemmbereich, der sich senkrecht zum Auflagetisch bewegen kann, mit dem ersten Klemmbereich besonders gut einer Kontur des Auflagetisches während der Vorschubbewegung angleichen kann. Um eine Klemmwirkung der Vorschubvorrichtung zu verbessern oder diese situationsbedingt variantenreicher ausgestalten zu können, kann besonders in dieser Ausführungsform der erste Klemmbereich zusätzlich durch den Einsatz von pneumatisch und/oder hydraulisch und/oder federnd wirkenden Aggregaten oder Einrichtungen die Klemmwirkung verstärken.

### Kurze Beschreibung der Zeichnungen

Nachfolgend wird anhand von Figuren ein Ausführungsbeispiel der Erfindung näher erläutert. Es zeigen:
- Figur 1: eine schematische Seitenansicht einer Bearbeitungsanlage für plattenförmige Werkstücke mit einer Vorschubvorrichtung;
- Figur 2: eine schematische Schnittdarstellung einer Spannzange der Vorschubeinrichtung von Figur 1; und.
- Figur 3: eine Schnittzeichnung der Spannzange der Vorschubeinrichtung von Figur 1.

### Detaillierte Beschreibung

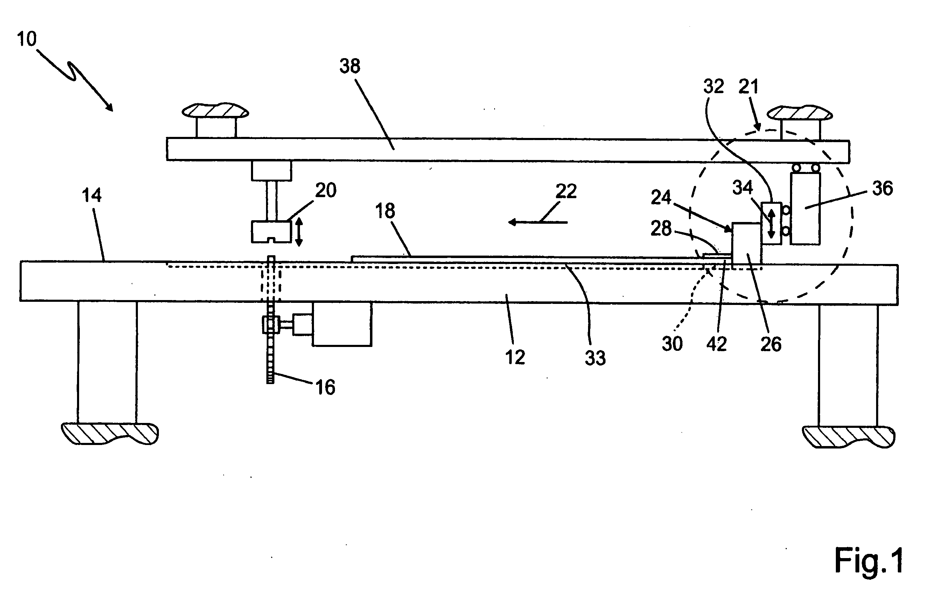

In Figur 1 trägt eine Bearbeitungsvorrichtung für plattenförmige Werkstücke insgesamt das Bezugszeichen 10. Sie umfasst einen horizontalen Auflagetisch 12 mit einer ebenfalls horizontalen oberen Auflagefläche 14. Als Bearbeitungsgerät ist bei der Bearbeitungsvorrichtung 10 eine Säge 16 vorgesehen, mit der ein auf der Auflagefläche 14 liegendes Werkstück 18 in einzelne Streifen aufgeteilt werden kann. Um während des Sägens das Werkstück 18 sicher in Position zu halten, ist oberhalb der Säge 16 ein vertikal verschiebbarer Druckbalken 20 vorgesehen.

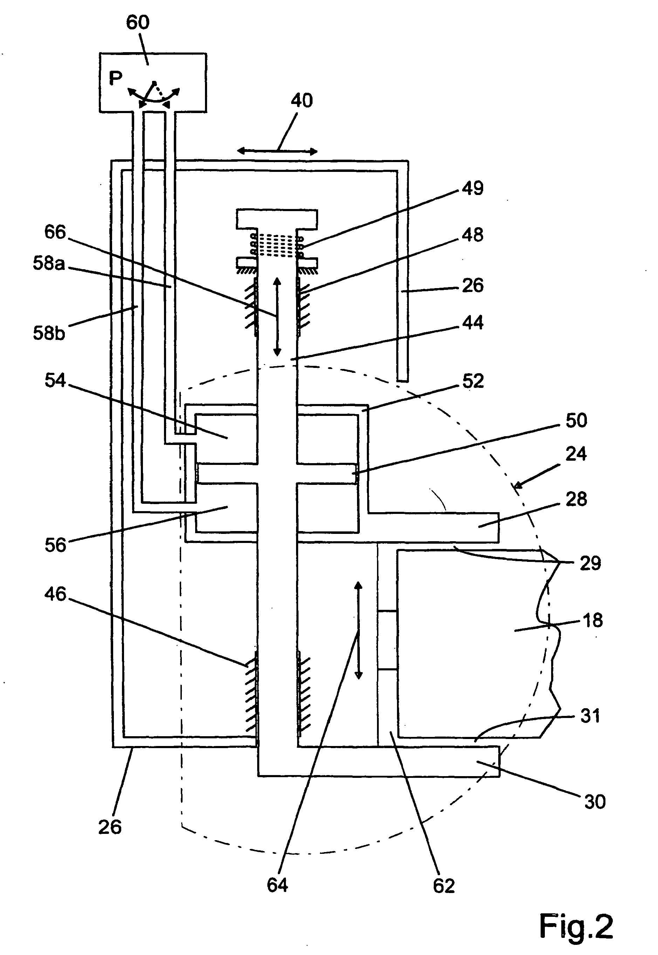

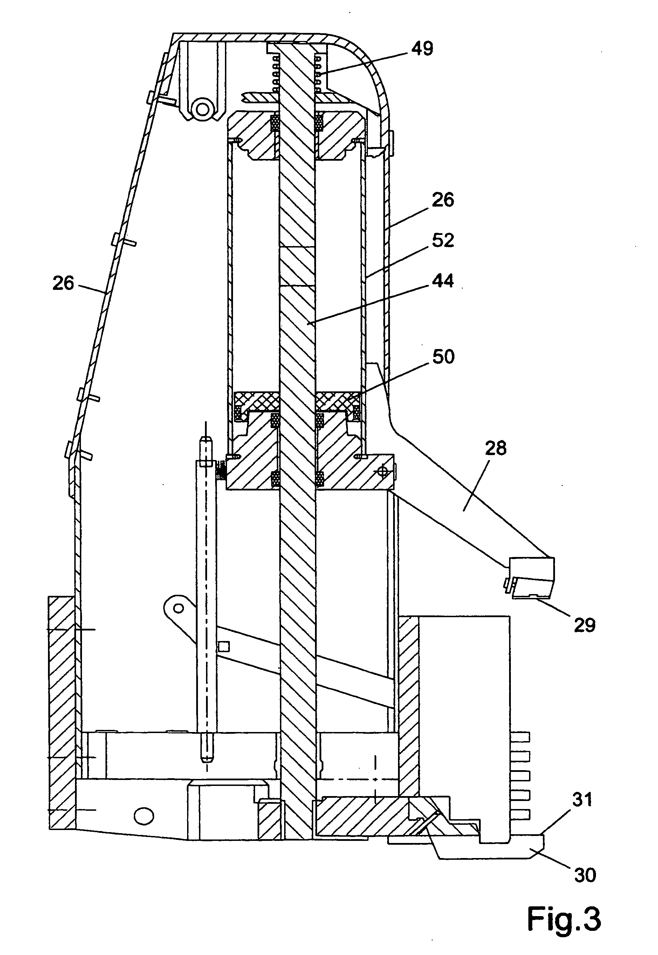

Um von der Säge 16 in einzelne Streifen aufgeteilt werden zu können, ist das Werkstück 18 mit Hilfe einer Vorschubvorrichtung 21 in Vorschubrichtung (Pfeil 22) bewegbar. Hierzu sind mehrere senkrecht zur Blattebene verteilt angeordnete Spannzangen vorgesehen, von denen in Figur 1 nur eine mit dem Bezugszeichen 24 sichtbar ist. Die Spannzange 24 umfasst einen Haltekörper 26, an dem zwei Spannbacken 28 und 30 mit jeweils einem Klemmbereich 29 und 31 (nur in Figur 2 und 3 mit Bezugszeichen versehen) beweglich angebracht sind.

Die in Figur 2 dargestellte untere Spannbacke kann zumindest zum Teil in eine nutartige und längs zur Vorschubrichtung 22 verlaufende und in der Auflagefläche 14 vorhandene Ausnehmung 33 abgesenkt sein. Die Spannzange 24 ist an einem Schlitten 32 befestigt, welcher in vertikaler Richtung (Doppelpfeil 34) gegenüber einem senkrecht zur Blattebene verlaufenden Balken 36 verschiebbar gelagert ist. In einer nicht dargestellten, vereinfachten Ausführungsform kann die Spannzange auch ohne Schlitten direkt am Balken 36 befestigt sein. Der Balken 36 kann wiederum längs zweier horizontaler Schienen, von denen in Figur 1 nur eine mit dem Bezugszeichen 38 sichtbar ist, längs zur Vorschubrichtung 22 beidseitig bewegt werden.

Im Betrieb wird ein in Vorschubrichtung 22 gesehen hinterer Bereich 42 des Werkstücks 18 zwischen den beiden Klemmbereichen 29 und 31 der Spannzange 24 verklemmt, indem die beiden Klemmbereiche 29 und 31 aufeinander zu bewegt werden. Durch eine Bewegung des Balkens 36 in Vorschubrichtung 22 wird das Werkstück der Säge 16 zugeführt. Nach der vollständigen Bearbeitung des Werkstücks 18 wird der hintere Bereich 42 des Werkstücks 18 von der Spannzange 24 wieder freigegeben. Der Schlitten 32 mit der Spannzange 24 wird vertikal nach oben bewegt, und der Balken 36 wird entgegen der Vorschubrichtung 22 zurückgefahren.

Figur 2 zeigt in einer konkreten Ausführungsform die Spannzange 24 mit den Komponenten 26, 28 und 30 der Vorschubvorrichtung 21 mit deren Betätigungseinrichtungen in einer schematischen Schnittdarstellung. Figur 3 zeigt eine Schnittzeichnung der Spannzange 24.

In dem Haltekörper 26 sind die Betätigungselemente für die beiden Spannbacken 28 und 30 angeordnet. Der in Figur 2 oder 3 untere Spannbacken 30 ist an einem unteren Ende einer im Wesentlichen senkrecht zum Auflagetisch 14 beweglichen Kolbenstange 44 rechtwinklig fest verbunden, so dass sich aus der Kolbenstange 52 und der Spannbacke 30 ein insgesamt L-förmiges Winkelelement ergibt. Die Kolbenstange 44 ist in einem unteren Bereich durch eine Führung 46 und in einem oberen Bereich durch eine Führung 48 im Wesentlichen senkrecht zum Auflagetisch geführt und gleichzeitig in Vorschubrichtung 22 gegenüber dem Haltekörper 26 fixiert.

In Längsrichtung ist die Kolbenstange 44 gegenüber dem Haltekörper 26 mit Spiel gelagert, wobei die Bewegung in beiden Richtungen durch eine nicht gezeigte Anschläge begrenzt ist. In Figur 2 oder 3 nach oben hin wird die Kolbenstange 44 durch eine Federeinrichtung 49 beaufschlagt. Als Federeinrichtung 49 ist ein Federelement, bspw. eine Spiralfeder aus einem Federstahl denkbar, dessen Federkraft in Längsrichtung auf die Kolbenstange 44 wirkt. Ebenso möglich ist jedoch auch ein an der Kolbenstange 44 angeordnetes, nach oben wirkendes federndes Luftvolumen, ggf. mit einstellbarem Luftdruck.

In einem mittleren Bereich ist die Kolbenstange 44 mit einem Kolben 50 verbunden, der mit einem längs zur Kolbenstange 44 verschiebbaren Zylindergehäuse 52 zusammen wirkt. Kolbenstange 44, Kolben 50 und Zylindergehäuse 52 bilden insgesamt einen Pneumatikzylinder. Die obere Spannbacke 28 ist mit dem verschiebbaren Zylindergehäuse 52 fest verbunden und erstreckt sich ebenso wie die untere Spannbacke 30 in Figur 2 oder 3 nach rechts zum Werkstück 18 hin.

Der Kolben 50 teilt den Innenraum des Pneumatikzylinders in zwei Kammern, nämlich eine in Figur 2 obere Kammer 54 und eine in Figur 2 untere Kammer 56. Beide Kammern 54 und 56 sind jeweils mit einer Druckluftleitung 58a bzw. 58b für Druckluft verbunden, welche in einer Druckluftpumpe 60 erzeugt wird. Die Druckluftpumpe 60 weist einen Umschalter auf, der die Druckluft entweder in die Druckluftzuführung 58a der oberen Kammer 54 leitet und die Druckluftzuführung 58b mit Atmosphäre verbindet, oder umgekehrt.

An einer Unterseite des Spannbackens 28 und einer Oberseite des Spannbackens 30 weist die Vorschubvorrichtung 21 einen in Vorschubrichtung festen Anschlag 62 für das zu klemmende Werkstück 18 auf. Der Anschlag ist so ausgestaltet, dass sich zum klemmenden Werkstück 18 hin eine glatte Fläche bildet.

Die Spannzange 24 arbeitet in der konkreten Ausführungsform wie folgt:

Außerhalb eines Klemmzustandes ist die Spannzange 24 geöffnet, die Spannbacken 28 und 30 haben dabei im Normalfall den größtmöglichen Abstand zueinander (Kammer 54 druckbeaufschlagt, Kammer 56 drucklos), der beispielsweise durch entsprechende nicht gezeigte Anschläge definiert ist. Soll nun ein Werkstück 18 zur weiteren Bearbeitung verklemmt werden, wird das Werkstück 18 zwischen die beiden Spannbacken 28 und 30 verbracht und zwar so, dass es am Anschlag 62 anliegt.

Danach wird der Umschalter der Druckluftpumpe 60 in der Weise betätigt, dass die in der Druckluftpumpe 60 erzeugte Druckluft in die untere Kammer 56 des Zylindergehäuses 52 strömt und die obere Kammer drucklos wird. Dadurch bewegt sich das verschiebbare Zylindergehäuse 52 mit samt der Spannbacke 28 in Richtung zur Spannbacke 30, bis das Werkstück 18 zwischen den beiden Klemmbereichen 29 und 31 der beiden Spannbacken 28 und 30 verklemmt ist. Die Höhe des Druckes kann je nach Empfindlichkeit des Werkstückes an der Bearbeitungsvorrichtung 10 bzw. an der Druckluftpumpe 60 eingestellt werden.

Bei der Verarbeitung des Werkstücks 18 durch die Bearbeitungsanlage 10 wird, wie bereits oben erwähnt wurde, die gesamte Spannzange 24 entlang der Vorschubrichtung 22 in beide Richtungen bewegt. Durch die "schwimmende", also als Ganzes längs zur Kolbenstange 44 bewegliche (Pfeil 66 in Figur 2) Anordnung der beiden Spannbacken 28 und 30 mit den Klemmbereich 29 und 31 können während der Vorschubbewegung Unebenheiten auf der Auflagefläche 14 ausgeglichen werden, indem sich der untere Spannbacken 30 an die Höhe der Auflagefläche 14 angleicht. Der obere Spannbacken 28 schwimmt dabei mit, da beide Spannbacken 28 und 30 an derselben Kolbenstange 44 direkt (unterer Spannbacken 30) bzw. indirekt (oberer Spannbacken 28) gehalten sind. Da die Kolbenstange 44 mit dem Federelement 49 entlastet ist, wird sichergestellt, dass die Spannbacke 28 zu jeder Zeit keinen Druck von oben auf das Werkstück 18 aufbringt, das Werkstück 18 jedoch immer auf der Auflagefläche 14 aufliegt.

Ist ein Arbeitsgang zur Verarbeitung des Werkstücks 18 an der Säge 16 beendet, wird der Umschalter in der Druckluftpumpe 60 umgelegt, so dass jetzt Druckluft in die obere Kammer 54 des Zylindergehäuses 52 einströmt und die untere Kammer 56 drucklos wird. Dabei bewegt sich das Zylindergehäuse 52 mitsamt des Spannbackens 28 in Figur 2 oder 3 nach oben, wodurch die Klemmwirkung der Spannbacken 28 und 30 aufgehoben und das Werkstück 18 frei wird.

In einer alternativen, nicht gezeigten Ausführungsform ist der untere Spannbacken um eine Achse, die sowohl senkrecht zur Klemmrichtung als auch senkrecht zur Vorschubrichtung verläuft, schwenkbar mit der Kolbenstange verbunden. Die Arbeitsweise der Vorrichtung ist identisch mit der oben beschriebenen Arbeitsweise. Die alternative Ausführungsform weist jedoch den Vorteil auf, dass der untere Spannbacken sich noch besser an Unebenheiten des Auflagetisches anpassen kann.

## Patentansprüche

1. Vorschubvorrichtung (21) für plattenförmige Werkstücke (18), mit einer Auflagefläche (14), auf der mindestens ein plattenförmiges Werkstück (18) angeordnet werden kann, und mit mindestens einer längs einer Vorschubrichtung (22) bewegbaren Spannzange (24), mit der das mindestens eine plattenförmige Werkstück (18) gegriffen werden kann, wobei die Spannzange (24) einen Haltekörper (26) und einen ersten Klemmbereich (31) und mindestens einen zweiten Klemmbereich (29) aufweist, zwischen denen das Werkstück (18) **dadurch** klemmbar ist, dass mindestens der zweite Klemmbereich (29) in Richtung auf den ersten Klemmbereich (31) zu bewegbar ist, wobei der erste Klemmbereich (31) mit einer Kolbenstange (44) verbunden ist, welche zu einem Pneumatikzylinder gehört, dessen Zylindergehäuse (52) mit dem zweiten Klemmbereich (29) verbunden ist, **dadurch gekennzeichnet, dass** die Kolbenstange (44) in ihrer Längsrichtung gegenüber dem Haltekörper (26) beweglich gelagert ist, so dass die beiden Klemmbereiche (31, 29) als Ganzes schwimmend gegenüber dem Haltekörper (26) gelagert sind.

2. vorschubvorrichtung (41) nach Anspruch 1, **dadurch gekennzeichnet, dass** die Kolbenstange (44) in Längsrichtung mit Spiel gelagert ist.

3. Vorschubvorrichtung (41) nach Anspruch 1 oder 2, **dadurch gekennzeichnet, dass** die Kolbenstange (44) in Längsrichtung, vorzugsweise nach oben wirkend von einer Federeinrichtung (49) beaufschlagt wird.

4. Vorschubvorrichtung (41) nach einem der vorhergehenden Ansprüche, **dadurch gekennzeichnet, dass** der erste Klemmbereich (31) starr mit der Kolbenstange (44) verbunden ist.

5. Vorschubvorrichtung (41) nach einem der Ansprüche 1 bis 3, **dadurch gekennzeichnet, dass** der erste Klemmbereich (31) mit der Kolbenstange (44) schwenkbar verbunden ist.

6. Spannzange (24) für eine Vorschubvorrichtung für plattenförmige Werkstücke (18) nach einem der vorhergehenden Ansprüche, wobei die Spannzange (24) einen Haltekörper (26) und einen ersten Klemmbereich (31) und mindestens einen zweiten Klemmbereich (29) aufweist, zwischen denen das Werkstück (18) **dadurch** klemmbar ist, dass mindestens der zweite Klemmbereich (29) in Richtung auf den ersten Klemmbereich (31) zu bewegbar ist, wobei der erste Klemmbereich (31) mit einer Kolbenstange (44) verbunden ist, welche zu einem Pneumatikzylinder gehört, dessen Zylindergehäuses (52) mit dem zweiten Klemmbereich (29) verbunden ist, **dadurch gekennzeichnet, dass** die Kolbenstange (44) in ihrer Längsrichtung gegenüber dem Haltekörper (26) beweglich gelagert ist, so dass die beiden Klemmbereiche (31, 29) als Ganzes schwimmend gegenüber dem Haltekörper (26) gelagert sind.

## Claims

1. A feed device (21) for plate-shaped work pieces (18), having a supporting surface (14) on which at least one plate-shaped work piece (18) can be arranged, and having at least one collet chuck (24), which can move along a feed direction (22) and which can grasp the at least one plate-shaped work piece (18), whereby the collet chuck (24) has a retaining element (26), a first clamping area (31), and at least one second clamping area (29), between which the work piece (18) can be clamped as a result of the fact that at least the second clamping area (29) can be moved in the direction of the first clamping area (31), whereby the first clamping area (31) is joined to a piston rod (44), which is part of a pneumatic cylinder, whose cylinder housing (52) is joined to the second clamping area (29), wherein the piston rod (44) is supported so that it can move in its longitudinal direction with respect to the retaining element (26), so that the two clamping areas (31, 29) are supported so that they float as one entity with respect to the retaining element (26).

2. The feed device (41) as recited in Claim 1, wherein the piston rod (44) is supported so that it has play in the longitudinal direction.

3. The feed device (41) as recited in Claim 1 or 2, wherein the piston rod (44) is acted upon in the longitudinal direction by a spring device (49), preferably pulling upwards.

4. The feed device (41) as recited in any of the preceding claims, wherein the first clamping area (31) is fixedly joined to the piston rod (44).

5. The feed device (41) as recited in any of Claims 1 to 3, wherein the first clamping area (31) is joined to the piston rod (44) in such a way that it can pivot.

6. A collet chuck (24) for a feed device for plate-shaped work pieces (18) as recited in any of the preceding claims, whereby the collet chuck (24) has a retaining element (26), a first clamping area (31), and at least one second clamping area (29), between which the work piece (18) can be clamped as a result of the fact that at least the second clamping area (29) can move in the direction of the first clamping area (31), whereby the first clamping area (31) is joined to a piston rod (44), which is a part of a pneumatic cylinder, whose cylinder housing (52) is joined to the second clamping area (29), wherein the piston rod (44) is supported so that it can move in its longitudinal direction with respect to the retaining element (26), so that the two clamping areas (31, 29) are supported so that they float as one entity with respect to the retaining element (26).

## Revendications

1. Dispositif d'avance (21) pour pièces en forme de panneaux (18), comportant une surface de réception (14), sur laquelle est posée au moins une pièce en forme de panneau (18), et comportant au moins une pince de serrage (24), mobile le long d'une direction d'avance (22) et permettant de saisir ladite au moins une pièce en forme de panneau (18), ladite pince de serrage (24) comportant un corps de fixation (26) et une première zone de serrage (31) et au moins une deuxième zone de serrage (29), entre lesquelles la pièce (18) peut être serrée par le fait qu'au moins la deuxième zone de serrage (29) est mobile dans la direction vers la première zone de serrage, ladite première zone de serrage (31) étant assemblée à une tige de piston (44), qui fait partie d'un vérin pneumatique, dont le carter (52) est assemblé à la deuxième zone de serrage (29), **caractérisé en ce que** la tige de piston (44) est montée mobile dans sa direction longitudinale par rapport au corps de fixation (26), de telle sorte que les deux zones de serrage (31, 29) sont montées, en formant un tout, de manière flottante par rapport au corps de fixation (26).

2. Dispositif d'avance (41) selon la revendication 1, **caractérisé en ce que** la tige de piston (44) est montée mobile avec un jeu dans la direction longitudinale.

3. Dispositif d'avance (41) selon la revendication 1 ou 2, **caractérisé en ce que** la tige de piston (44) est sollicitée par un dispositif à ressort (49) dans la direction longitudinale, de préférence en agissant vers le haut.

4. Dispositif d'avance (41) selon l'une quelconque des revendications précédentes, **caractérisé en ce que** la première zone de serrage (31) est assemblée de manière rigide à la tige de piston (44).

5. Dispositif d'avance (41) selon l'une quelconque des revendications 1 à 3, **caractérisé en ce que** la première zone de serrage (31) est assemblée de manière pivotante à la tige de piston (44).

6. Pince de serrage (24) pour un dispositif d'avance pour des pièces en forme de panneaux (18) selon l'une quelconque des revendications précédentes, ladite pince de serrage (24) comportant un corps de fixation (26) et une première zone de serrage (31) et au moins une deuxième zone de serrage (29), entre lesquelles la pièce (18) peut être serrée par le fait qu'au moins la deuxième zone de serrage (29) est mobile dans la direction vers la première zone de serrage, ladite première zone de serrage (31) étant assemblée à une tige de piston (44), qui fait partie d'un vérin pneumatique, dont le carter (52) est assemblé à la deuxième zone de serrage (29), **caractérisé en ce que** la tige de piston (44) est montée mobile dans sa direction longitudinale par rapport au corps de fixation (26), de telle sorte que les deux zones de serrage (31, 29) sont montées, en formant un tout, de manière flottante par rapport au corps de fixation (26).
